# EUROPÄISCHE PATENTANMELDUNG

(11) **EP 3 266 638 A1**
(43) Veröffentlichungstag der Anmeldung: **10.01.2018**
(21) Anmeldenummer: 17175119.1
(22) Anmeldetag: 09.06.2017
(51) Int. Cl.: B60K 31/00, B62D 6/00, B61L 3/00, G06K 9/00, B60L 5/24, G01C 21/00, G01C 21/12, G05D 1/02, G06T 7/70, B62D 1/28, B62D 15/02, B60W 30/12, G08G 1/16, G06Q 50/30

(54) **AUTOMATISIERTES ANSTEUERN EINER SOLLFAHRSPUR ZUR KONTINUIERLICHEN VERSORGUNG MIT ELEKTRISCHER ENERGIE**

(30) Priorität: 27.06.2016 DE 102016211483
(71) Anmelder: Siemens Aktiengesellschaft, 80333 München (DE)
(72) Erfinder: Bühs, Florian, 10777 Berlin (DE); Engdahl, Henrik, 91056 Erlangen (DE); Francke, Jürgen, 12524 Berlin (DE); Gerstenberg, Frank, 10409 Berlin (DE); Gräbner, Oliver, 85579 Neubiberg (DE); Lehmann, Michael, 91054 Erlangen (DE); Sänger, Göran, 12587 Berlin (DE)

(57) **Zusammenfassung**

Es wird eine Fahrzeugsteuerungseinrichtung (30) zum automatisierten Steuern eines elektrischen Straßenfahrzeugs (1) für ein Wegesystem (2) mit einem Energieversorgungssystem mit einer fahrspurgebundenen Energieversorgungsleitung, insbesondere einem Oberleitungssystem (7), beschrieben. Die Fahrzeugsteuerungseinrichtung (30) weist eine Positions-Ermittlungseinheit (33) zum Ermitteln der geographischen Position des elektrischen Straßenfahrzeugs (1) auf. Zudem weist die Fahrzeugsteuerungseinrichtung (30) eine Sollfahrspur-Ermittlungseinheit (31) zum Ermitteln von Positionsdaten einer der fahrspurgebundenen Energieversorgungsleitung (7) zugeordneten Sollfahrspur (3) auf. Die Sollfahrspur-Ermittlungseinheit (31) umfasst eine Kommunikationsschnittstelle zur Übermittlung der ermittelten aktuellen Relativpositionen (PD) von Infrastrukturmerkmalen zu dem elektrischen Straßenfahrzeug (1) an eine externe zentrale Sollfahrspur-Ermittlungseinrichtung (40) und zum Empfang von Positionsdaten (SFS) umfassend eine aktuelle Relativposition einer Sollfahrspur (3) bezüglich der aktuellen Position (PD) des elektrischen Straßenfahrzeugs (1). Die Fahrzeugsteuerungseinrichtung (30) umfasst außerdem eine Fahrzeug-Steuerungseinheit (32) zum Steuern des elektrischen Straßenfahrzeugs (1) zu der ermittelten Sollfahrspur (3) in Abhängigkeit von der ermittelten Relativposition der Sollfahrspur (3). Es wird weiterhin ein elektrisches Straßenfahrzeug (1) beschrieben. Es wird ferner eine zentrale Sollfahrspur-Ermittlungseinrichtung (40) beschrieben. Es wird überdies ein Transportsystem (100) beschrieben. Fernerhin wird ein Verfahren (400) zum Überwachen und Steuern einer Trajektorie eines elektrischen Straßenfahrzeugs (1) auf einem Wegesystem (2) mit einer fahrspurgebundenen Energieversorgungsleitung (7) beschrieben.

## Beschreibung

Die Erfindung betrifft eine Fahrzeugsteuerungseinrichtung zum automatisierten Steuern eines elektrischen Straßenfahrzeugs für ein Wegesystem mit einem Energieversorgungssystem mit einer fahrspurgebundenen Energieversorgungsleitung, insbesondere einem Oberleitungssystem. Zudem betrifft die Erfindung ein elektrisches Straßenfahrzeug für ein Wegesystem mit einem Energieversorgungssystem mit einer fahrspurgebundenen Energieversorgungsleitung, insbesondere einem Oberleitungssystem. Überdies betrifft die Erfindung eine zentrale Sollfahrspur-Ermittlungseinrichtung für ein Wegesystem mit einem fahrspurgebundenen Energieversorgungssystem, insbesondere einem Oberleitungssystem. Weiterhin betrifft die Erfindung ein Transportsystem mit einem Wegesystem mit einer fahrspurgebundenen Energieversorgungsleitung, insbesondere einem Oberleitungssystem. Schließlich betrifft die Erfindung auch ein Verfahren zum Überwachen und Steuern einer Trajektorie eines elektrischen Straßenfahrzeugs auf einem Wegesystem mit einer fahrspurgebundenen Energieversorgungsleitung, insbesondere einem Oberleitungssystem.

Elektrische Transportsysteme für den Transport von Gütern und Personen mit Fahrleitungen zur Versorgung von Straßenfahrzeugen mit elektrischer Energie werden in vielen verschiedenen Varianten eingesetzt. Bei dem Einsatz von fahrspurgebundenen Energieversorgungssystemen für nicht schienengebundene Fahrzeuge, insbesondere Straßenfahrzeuge, werden üblicherweise gleichstrombasierte Oberleitungssysteme eingesetzt. Diese haben den Vorteil eines geringeren Platzbedarfs und einer erhöhten Sicherheit.

Ein zukünftiges Anwendungsgebiet für fahrspurgebundene Versorgungssysteme ist der Gütertransport auf Fernstraßen.

Dabei beziehen elektrifizierte Fahrzeuge, insbesondere elektrifizierte Lastkraftwagen, während der Fahrt elektrische Energie aus Fahrleitungen, insbesondere Oberleitungen, die entlang der Fernstraßen montiert sind. Ein solcher elektrifizierter Lastkraftwagen ist mit einem Hybridsystem mit einem Antrieb aus einem Verbrennungsmotor und einem Elektromotor ausgerüstet. Der elektrifizierte Lastkraftwagen bezieht mit Hilfe eines Stromabnehmers, auch Pantograph genannt, aus einer Oberleitung kontinuierlich elektrische Antriebsenergie.

Fahrleitungen sollen in diesem Zusammenhang jede Art von elektrischen Versorgungsleitungen umfassen, mit denen eine fahrspurgebundene Versorgung von elektrischen Fahrzeugen mit elektrischer Energie möglich ist. Bei einem mehrpoligen Energieversorgungssystem umfasst der Begriff Fahrleitung die verschieden gepolten Leitungen des Systems, also mehrere Stromleitungen bzw. Fahrdrähte.

Bei allen Ausführungen von elektrischen Fahrzeugen mit Pantographen besteht die Notwendigkeit, Bewegungen des Fahrzeugs in Querrichtung auszugleichen. Ein Transportsystem mit einem nicht schienengebundenen Fahrzeug, welches über Oberleitungen mit Energie versorgt wird, ist beispielsweise aus der DE 10 2011 076 623 A1 bekannt. Das dort gezeigte nicht schienengebundene Fahrzeug weist einen Stromabnehmer zur Einspeisung elektrischer Energie aus einer zweipoligen Oberleitung auf, deren als Hin- und Rückleiter ausgebildete Fahrdrähte jeweils durch mindestens eine Schleifleiste des Stromabnehmers kontaktierbar sind. In einer in der genannten Offenlegungsschrift beschriebenen exemplarischen Ausführung weist der Stromabnehmer zwei Tragausleger auf, die jeweils am Fahrzeug und an einer die Schleifleisten tragenden Wippe derart kipp- und schwenkbar ausgelegt sind, dass die Wippe sowohl anheb- und absenkbar als auch quer zur Fahrtrichtung bewegbar ist, um so Änderungen der Position des Fahrzeugs in Querrichtung auszugleichen.

Eine Ist-Lage des Fahrzeugs relativ zu den Fahrdrähten wird mittels eines Lagesensors erfasst, der als fahrzeugfeste Videokamera ausgebildet ist. Das Fahrzeug weist eine Regeleinrichtung auf, die aus einem Vergleich der erfassten Ist-Lage mit einer vorgegebenen Soll-Lage des Fahrzeugs relativ zu den Fahrdrähten eine Stellgröße bestimmt. Die Regeleinrichtung steuert entsprechend der bestimmten Stellgröße einen Stellantrieb zur seitlichen Nachführung einer die Schleifleisten tragenden Wippe an. Die Ist-Lage beruht auf der automatisierten Erkennbarkeit der Fahrdrähte auf den aufgenommenen Videobildern, beispielsweise durch Anwendung eines so genannten Pattern-Matchings (zu Deutsch: Musterabgleich).

Diese Vorgehensweise ist aber bei schlechten Sichtbedingungen, wie etwa bei Dunkelheit, bei Nebel oder bei Niederschlag, stark beeinträchtigt bis unmöglich. Außerdem müssen das Objektiv der Videokamera und auch die Fahrdrähte möglichst frei von Schmutz sein, was praktisch kaum erreichbar ist.

Eine Oberleitung eines solchen Transportsystems ist üblicherweise parallel zur Fahrbahnmitte angeordnet. In manchen Fällen verläuft die Oberleitung auch sehnenförmig, z.B. in einer Kurve. Die Winkel zwischen den Auslegern der Strommasten sind dabei von verschiedenen Faktoren abhängig, beispielsweise von dem Kurvenradius oder der Art der Abspannung der Oberleitung. Bei den bisher eingesetzten Pantographen werden Horizontal- und Vertikalführungen für die Schleifkontakte verwendet, um den Kontakt zur Oberleitung unabhängig von horizontaler und vertikaler Oberleitungsposition, dem Verlauf der Oberleitung und der Fahrzeugposition oder der Fahrzeugbewegung in einem möglichst großen Bereich aufrechtzuerhalten.

Diese Konzeption umfasst im Gegensatz zu Bahn- und/oder O-Bus-Stromabnehmern mehrere Freiheitsgrade in der vertikalen und horizontalen Raumachse, was zu einem insgesamt sehr aufwändigen mechatronischen System führt. Zur Detektion von Oberleitungen werden zwei unterschiedliche Sensorsysteme verwendet. Ein annähernd senkrecht ausgerichteter Laserscanner erfasst die Oberleitungsposition vom elektrifizierten Fahrzeug aus. Je nach Montageort detektiert der Scanner die Oberleitung kurz vor oder sogar hinter den Schleifleisten des Pantographen. Während die Schleifleisten des Pantographen Kontakt mit der Oberleitung haben, detektieren Endschalter am Rand der Schleifleisten, wenn die Oberleitung den zulässigen Arbeitsbereich auf der Schleifleiste verlässt.

Die Regelung der vertikalen Schleifleistenposition basiert auf einer Information eines Laserscanners. Da die Oberleitung in der Nähe der Schleifleistenposition überwacht wird, z.B. kurz vor oder hinter der Schleifleiste, sind die Zeit zur Verarbeitung des Signals und eine anschließende Nachregelung der vertikalen Schleifleistenposition nur sehr kurz. Daher wird herkömmlich eine hohe Regeldynamik benötigt, die zu hohen Anforderungen an die Steuerung und vor allem an die Antriebe für die Horizontal- und Vertikalführung des Pantographen führt. Die notwendigen Drehmomente und Beschleunigungen bedingen eine hohe Energieaufnahme und leiten enorme Kräfte in die gesamte mechanische Konstruktion ab, die dadurch größer und schwerer wird. Darüber hinaus steigen die Kosten für die Konstruktion im Allgemeinen und insbesondere auch für die sehr leistungsstarken Antriebe deutlich an.

Die hohen Beschleunigungen bei der Positionsregelung der Pantographen treten auch aufgrund einer stark eingeschränkten Information bezüglich des weiteren Verlaufs der Oberleitung auf. Diese ist darauf zurückzuführen, dass die Oberleitung herkömmlich nur in einem kurzen Bereich vor dem Stromabnehmer detektiert werden kann. Mithin ist die Reaktionszeit für die Steuerung des Pantographen sehr kurz, so dass hohe Beschleunigungen, Kräfte und Drehmomente auftreten.

Zwar sind Verfahren zur Detektion der Oberleitung mit Hilfe von optischen Messverfahren und aktiven Merkmalen auf der Infrastruktur bekannt; da diese auf optischen Messverfahren beruhen, sind sie alle wetterabhängig, was bei schlechtem Wetter, wie z.B. Regen, Schneefall oder Nebel, zu erheblichen Schwierigkeiten oder sogar zu einem Totalausfall des Transportsystems führt.

In DE 10 2012 205 276 A1 wird eine Relativlage eines Stromabnehmers zu Fahrdrähten mit Hilfe von Erfassungsmitteln ermittelt. Ein Lenkassistenzsystem lenkt das Fahrzeug automatisiert in Abhängigkeit von der erfassten Relativlage. Die Erfassungsmittel umfassen ein Positionsbestimmungssystem zur Bestimmung einer aktuellen Fahrzeugposition des Fahrzeugs auf der Fahrspur und eine Datenbank mit gespeicherten Fahrdrahtpositionen der Fahrdrähte entlang der Fahrspur. Die Erfassungsmittel sind dazu ausgebildet, die Relativlage aus der aktuell bestimmten Fahrzeugposition und aus den zugeordneten Fahrdrahtpositionen zu berechnen.

In DE 11 2013 001 814 T5 wird ein System zum Führen eines geländegängigen Lastkraftwagens entlang eines Fahrwegs bezüglich eines Oberleitungsdrahts beschrieben. Eine Position eines Lastkraftwagens auf dem Fahrweg wird durch Erfassen von zwei oder mehr Gegenständen am Fahrwegrand ermittelt und dazu genutzt, um unter Kenntnis einer Position des Oberleitungsdrahts eine Relativpositionen des Lastkraftwagens unter dem Oberleitungsdraht zu ermitteln.

In DE 10 2011 076 623 A1 wird ein nicht schienengebundenes Fahrzeug mit einem Stromabnehmer, welcher seitliche Abweichungen beim Lenken des Fahrzeugs ausgleicht, beschrieben.

In "Intelligent traffic control and optimization with cooperative systems on the eHighway", Thomas Sachse, Oliver Gräbner, Meike Möckel, Claus Kaschwich, Jens Plättner, 2014 International Conference on Connected Vehicles and Expo, wird eine zentrale Verkehrsüberwachung (traffic control centre) beschrieben, mit der Informationen über Unfälle oder Straßenbauarbeiten an einzelne Fahrzeuge übertragen werden.

Es ist mithin eine Aufgabe der vorliegenden Erfindung, eine Vorrichtung und ein Verfahren zum Erzielen eines ständigen Kontakts eines Pantographen eines elektrifizierten Straßenfahrzeugs mit einer Fahrleitung zu entwickeln, mit denen die genannten Einschränkungen und Schwierigkeiten überwunden werden.

Diese Aufgabe wird durch eine Fahrzeugsteuerungseinrichtung gemäß Patenanspruch 1, ein elektrisches Straßenfahrzeug gemäß Patentanspruch 8, eine zentrale Sollfahrspur-Ermittlungseinrichtung gemäß Patentanspruch 9, ein Transportsystem gemäß Patentanspruch 10 und ein Verfahren zum Überwachen und Steuern eines elektrischen Straßenfahrzeugs gemäß Patentanspruch 12 gelöst.

Die erfindungsgemäße Fahrzeugsteuerungseinrichtung dient dem automatisierten Steuern eines elektrischen Straßenfahrzeugs für ein Wegesystem mit einem Energieversorgungssystem mit einer fahrspurgebundenen Energieversorgungsleitung, insbesondere einem Oberleitungssystem. Als "automatisiertes Steuern" soll in diesem Zusammenhang insbesondere ein teilautomatisiertes Steuern verstanden werden. Dabei können Lenkbefehle automatisiert - d.h. ohne Eingreifen des Fahrers - ausgegeben und umgesetzt werden oder dem Fahrer Anweisungen zur Korrektur seines Lenkverhaltens gegeben werden. Die erfindungsgemäße Fahrzeugsteuerungseinrichtung umfasst eine Positions-Ermittlungseinheit zum Ermitteln einer Relativposition des elektrischen Straßenfahrzeugs. Diese Relativposition wird durch das Ermitteln von aktuellen Relativpositionen von Infrastrukturmerkmalen zu dem elektrischen Straßenfahrzeug bestimmt. Das Ermitteln der eigenen Position relativ zu der Infrastruktur kann z.B. durch Selbstlokalisation oder mit Hilfe von Informationen von externen Positionsdetektionseinrichtungen vorgenommen werden. Teil der erfindungsgemäßen Fahrzeugsteuerungseinrichtung ist außerdem eine Sollfahrspur-Ermittlungseinheit zum Ermitteln von Positionsdaten einer der fahrspurgebundenen Energieversorgungsleitung zugeordneten Sollfahrspur. Als Sollfahrspur soll in diesem Zusammenhang eine Fahrspur bzw. eine abzufahrende Trajektorie zu verstehen sein, auf der durch das elektrische Straßenfahrzeug mit der fahrspurgebundenen Energieversorgungsleitung ein elektrischer Kontakt gehalten werden kann. Zusätzlich soll die Sollfahrspur derart auf der genutzten Fahrstraße angeordnet sein, dass ein elektrisches Straßenfahrzeug, wenn es die Sollfahrspur befährt, unter Beachtung der seitlichen Toleranzen seine eigentliche Fahrspur, d.h. die verkehrsrechtlich festgelegte Fahrspur, nicht verlässt. Weiterhin kann die Breite der Sollfahrspur auch in Abhängigkeit von einer Breite des verwendeten Stromabnehmers bzw. dessen Schleifleiste festgelegt sein, wobei die Spurbreite so gewählt ist, dass ein Fahrzeug, dessen Mittellinie sich über der Sollfahrspur befindet, in jedem Fall vollen elektrischen Kontakt zu der Fahrleitung hat. Zur Ermittlung der Positionsdaten der Sollfahrspur umfasst die Sollfahrspur-Ermittlungseinheit eine Kommunikationsschnittstelle zum Übermitteln der ermittelten Relativposition des elektrischen Straßenfahrzeugs von dem elektrischen Straßenfahrzeug an eine externe zentrale Sollfahrspur-Ermittlungseinrichtung und zum Empfangen von durch die zentrale Sollfahrspur-Ermittlungseinrichtung auf Basis der aktuellen Relativposition von Infrastrukturmerkmalen zu dem elektrischen Straßenfahrzeug und zentral erfassten und/oder ermittelten Informationen hinsichtlich des Verlaufs bzw. der Position der anzusteuernden Sollfahrspur ermittelten Positionsdaten umfassend eine aktuelle Relativposition einer Sollfahrspur bezüglich der aktuellen Position des elektrischen Straßenfahrzeugs von der externen zentralen Sollfahrspur-Ermittlungseinrichtung.

Vorteilhaft erhält die erfindungsgemäße Fahrzeugsteuerungseinrichtung zentral erfasste und/oder ermittelte Informationen hinsichtlich des Verlaufs bzw. der Position der anzusteuernden Sollfahrspur. Die zentral erfassten Informationen basieren auf einer breiteren Datengrundlage als die von nur einem elektrischen Fahrzeug ermittelten Sollfahrspurpositionsdaten. Auf diese Weise kann eine Ermittlung der Position einer Sollfahrspur besonders zuverlässig durchgeführt werden.

Die Ermittlung der Sollfahrspur kann z.B. mit Hilfe von externen Informationen, beispielsweise aus Datenbanken, aber auch durch das Berücksichtigen von Informationen, welche durch die Detektion von Infrastrukturelementen bzw. deren Position und Verlauf durch das betreffende elektrische Straßenfahrzeug oder auch andere mit Detektionseinrichtungen versehene Straßenfahrzeuge ermittelt wurden, erfolgen. Die erfindungsgemäße Fahrzeugsteuerungseinrichtung umfasst außerdem eine Fahrzeug-Steuerungseinheit zum Steuern des elektrischen Straßenfahrzeugs zu der ermittelten Sollfahrspur in Abhängigkeit von der ermittelten Relativposition der Sollfahrspur. Die Steuerung soll vorzugsweise automatisiert erfolgen, d.h. es wird auf Basis der ermittelten Positionsdaten automatisiert eine Korrekturtrajektorie bzw. Korrekturfahrstrecke ermittelt, welche anschließend durch das elektrische Straßenfahrzeug vorzugsweise automatisiert gefahren wird, so dass sich das elektrische Straßenfahrzeug nach dem Abfahren der Korrekturfahrstrecke wieder auf der Sollfahrspur befindet.

Sollte sich bei der Bearbeitung der Positionsdaten herausstellen, dass sich das betreffende elektrische Straßenfahrzeug bereits auf der Sollfahrspur befindet, so wird nicht in die Steuerung des elektrischen Straßenfahrzeugs eingegriffen. Alternativ kann das Steuern des Befahrens der Korrekturfahrstrecke auch durch einen Fahrer erfolgen, der anhand eines ihm angezeigten Schemas, beispielsweise einer Navigationskarte mit einer markierten Route oder einer Richtungs- und Streckenangabe, die Korrekturstrecke abfährt. Vorteilhaft kann mit Hilfe der erfindungsgemäßen Fahrzeugsteuerungseinrichtung auf ein korrekturbedingtes Verändern der Stellung und Position des Stromabnehmersystems eines elektrischen Fahrzeugs selbst, beispielsweise in Horizontalrichtung bzw. in Querrichtung, verzichtet werden, wenn sich die Position des elektrischen Fahrzeugs relativ zu einer fahrspurgebundenen Energieversorgungsleitung ändert. Mithin kann auf eine komplizierte Betätigungsmechanik und Steuerungs- und Regelungselektronik für das Stromabnehmersystem, beispielsweise ein Pantograph, verzichtet werden oder diese zumindest einfacher ausgestaltet werden. Außerdem kann das Stromabnehmersystem auch kleiner und weniger robust ausgestaltet werden, da die bei Korrekturbewegungen auftretenden Drehmomente und Beschleunigungen und damit verbundenen starken Kräfte, welche auf das Stromabnehmersystem herkömmlich wirken, reduziert sind bzw. wegfallen. Weiterhin können auch Antriebsmotoren für die Korrekturbewegungen eines Stromabnehmersystems entweder kleiner dimensioniert oder ganz eingespart werden.

Das erfindungsgemäße elektrische Straßenfahrzeug für ein Wegesystem mit einem Energieversorgungssystem mit einer fahrspurgebundenen Energieversorgungsleitung, insbesondere einem Oberleitungssystem, weist eine erfindungsgemäße Fahrzeugsteuerungseinrichtung auf. Das erfindungsgemäße elektrische Fahrzeug ist beispielsweise ein elektrisch betriebener Lastkraftwagen. Elektrifizierte Lastkraftwagen sind aufgrund ihres hohen Energieverbrauchs auf die Versorgung durch elektrische Fahrleitungen angewiesen, wenn sie einen erheblichen Teil der Traktionsenergie durch elektrische Energie aufbringen wollen.

Die erfindungsgemäße zentrale Sollfahrspur-Ermittlungseinrichtung für ein Wegesystem mit einem fahrspurgebundenen Energieversorgungssystem, insbesondere einem Oberleitungssystem, weist eine Datenbank auf, in der Positionsdaten einer Sollfahrspur gespeichert sind. Das heißt, es werden in der Datenbank Daten gespeichert, die die Ortslage - vorzugsweise die geographische Lage der Sollfahrspur bzw. deren Verlauf - wiedergeben. Teil der erfindungsgemäßen zentralen Sollfahrspur-Ermittlungseinrichtung ist außerdem eine Empfangsschnittstelle zum Empfangen von Positionsdaten bezüglich einer Relativposition einer Sollfahrspur zu Infrastrukturmerkmalen und/oder von Daten bezüglich einer Relativposition von Infrastrukturmerkmalen zu einem elektrischen Straßenfahrzeug. Die Daten bezüglich der Relativposition der Infrastrukturmerkmale, beispielsweise Positionen von Fahrleitungsmasten oder Positionen von Fahrbahnmarkierungen, oder auch Positionen von speziellen Positionsmarkierungen, können z.B. von einem oder mehreren Straßenfahrzeugen erfasst bzw. ermittelt worden sein und an die zentrale Sollfahrspur-Ermittlungseinrichtung weitergesandt werden. Ebenso können auch die Positionsdaten z.B. von einem elektrischen Straßenfahrzeug aus an die zentrale Sollfahrspur-Ermittlungseinrichtung übermittelt werden. Dabei ist die zentrale Sollfahrspur-Ermittlungseinrichtung vorzugsweise stationär installiert und kommuniziert mit mindestens einem, vorzugsweise einer Mehrzahl von elektrischen Straßenfahrzeugen. Die erfindungsgemäße zentrale Sollfahrspur-Ermittlungseinrichtung umfasst außerdem eine zentrale Recheneinheit zum Ermitteln von Positionsdaten einer Sollfahrspur umfassend eine aktuelle Relativposition der Sollfahrspur bezüglich der aktuellen Position eines Straßenfahrzeugs auf der Basis der Positionsdaten der Sollfahrspur und der Daten bezüglich einer Relativposition von Infrastrukturmerkmalen zu einem elektrischen Fahrzeug. Die zentrale Recheneinheit führt alle Daten beispielsweise mit Hilfe eines so genannten SLAM-Algorithmus (Simultaneous Localization and Mapping = simultanes Lokalisieren und Kartieren) zusammen und errechnet sehr genaue Positionsdaten einer Sollfahrspur bezogen auf die Positionsdaten der Infrastrukturmerkmale.

Beispielsweise erfolgt anhand der von mehreren elektrischen Fahrzeugen erhobenen Positionsdaten ein Abgleich mit bereits in der Datenbank vorhandenen Positionsdaten der Sollfahrspur und gegebenenfalls eine Korrektur der vorhandenen Daten. Teil der erfindungsgemäßen zentralen Sollfahrspur-Ermittlungseinrichtung ist außerdem eine Ausgangsschnittstelle zum Übertragen der ermittelten Positionsdaten der Sollfahrspur an ein elektrisches Straßenfahrzeug. Durch die zentrale Verarbeitung von Positionsdaten kann ein umfassendes Bild des aktuellen Verlaufs einer Sollfahrspur ermittelt werden und die betreffende Information allen elektrischen Fahrzeugen mitgeteilt werden. Vorteilhaft können mit der erfindungsgemäßen zentralen Sollfahrspur-Ermittlungseinrichtung auch kurzfristige Änderungen und Aktualisierungen der Position der Sollfahrspur zentral erfasst und einer Mehrzahl von elektrischen Straßenfahrzeugen mitgeteilt werden, so dass diese stets über aktuelle Informationen hinsichtlich eines Verlaufs einer Sollfahrspur verfügen.

Das erfindungsgemäße Transportsystem mit einem Wegesystem mit einer fahrspurgebundenen Energieversorgungsleitung, insbesondere einem Oberleitungssystem, umfasst mindestens ein erfindungsgemäßes elektrisches Straßenfahrzeug und vorzugsweise eine erfindungsgemäße zentrale Sollfahrspur-Ermittlungseinrichtung. Als Transportsystem soll in diesem Zusammenhang das Gesamtsystem aus Fahrzeugen, Energieversorgung, Straßenführung und eventueller weiterer Einrichtungen, wie z.B. Verkehrsleiteinrichtungen usw., verstanden werden.

Bei dem erfindungsgemäßen Verfahren zum Überwachen und Steuern einer Trajektorie eines elektrischen Straßenfahrzeugs auf einem Wegesystem mit einer fahrspurgebundenen Energieversorgungsleitung, insbesondere einem Oberleitungssystem, wird eine aktuelle Relativposition des elektrischen Straßenfahrzeugs zu Infrastrukturmerkmalen ermittelt. Die Ermittlung der Relativposition des elektrischen Straßenfahrzeugs kann auch durch Detektion von Infrastrukturkomponenten und deren Abständen bzw. Relativposition zu dem betreffenden elektrischen Straßenfahrzeug ermittelt werden. Weiterhin werden Positionsdaten einer Sollfahrspur ermittelt, welche einer fahrspurgebundenen Energieversorgungsleitung zugeordnet ist.

Dafür wird die ermittelte Relativposition von Infrastrukturmerkmalen zu dem elektrischen Straßenfahrzeug von dem elektrischen Straßenfahrzeug an eine zentrale Sollfahrspur-Ermittlungseinrichtung übermittelt und es werden durch die zentrale Sollfahrspur-Ermittlungseinrichtung auf Basis der aktuellen Relativposition von Infrastrukturmerkmalen zu dem elektrischen Straßenfahrzeug und zentral erfassten und/oder ermittelten Informationen hinsichtlich des Verlaufs bzw. der Position der anzusteuernden Sollfahrspur ermittelten Positionsdaten, welche eine aktuelle Relativposition einer Sollfahrspur bezüglich der aktuellen Position des elektrischen Straßenfahrzeugs umfassen, von der zentralen Sollfahrspur-Ermittlungseinrichtung durch das elektrische Straßenfahrzeug empfangen. In Abhängigkeit von der ermittelten Relativposition der Sollfahrspur wird das elektrische Straßenfahrzeug zu der ermittelten Sollfahrspur gesteuert. D.h., es wird für den Fall einer Abweichung des elektrischen Straßenfahrzeugs von der Sollfahrspur eine Wegstrecke ermittelt, welche das elektrische Straßenfahrzeug zurücklegen muss, um zu der ermittelten Sollfahrspur zu gelangen, und das Fahrzeug über die ermittelt Wegstrecke zu der Sollfahrspur gesteuert.

Die wesentlichen Komponenten der erfindungsgemäßen Fahrzeugsteuerungseinrichtung und der erfindungsgemäßen zentralen Sollfahrspur-Ermittlungseinrichtung können zum überwiegenden Teil in Form von Softwarekomponenten ausgebildet sein. Dies betrifft insbesondere die Positions-Ermittlungseinheit, die Sollfahrspur-Ermittlungseinheit, die Fahrzeug-Steuerungseinheit und die zentrale Recheneinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete elektrische Straßenfahrzeuge und vorhandene Verkehrsleiteinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines elektrischen Straßenfahrzeugs und/ oder einer Speichereinrichtung einer zentralen Verkehrsleiteinrichtung ladbar ist, mit Programmabschnitten, um alle Schritte des erfindungsgemäßen Verfahrens auszuführen, wenn das Programm in dem elektrischen Straßenfahrzeug bzw. der zentralen Verkehrsleiteinrichtung ausgeführt wird. Ein solches Computerprogrammprodukt kann neben dem Computerprogramm gegebenenfalls zusätzliche Bestandteile wie z.B. eine Dokumentation und/oder zusätzliche Komponenten, auch Hardware-Komponenten, wie z. B. Hardware-Schlüssel (Dongles etc.) zur Nutzung der Software, umfassen. Eine derart programmierte zentrale Verkehrsleiteinrichtung kann also insbesondere die Funktionen der erfindungsgemäßen zentralen Sollfahrspur-Ermittlungseinrichtung wahrnehmen.

Zum Transport zu der Speichereinheit und/oder zur Speicherung an oder in der Speichereinheit des elektrischen Fahrzeugs bzw. der zentralen Verkehrsleiteinrichtung kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung der erfindungsgemäßen Fahrzeugsteuerungseinrichtung ist die Sollfahrspur derart angeordnet, dass ein auf der Sollfahrspur fahrendes elektrisches Straßenfahrzeug die fahrspurgebundene Energieversorgungsleitung optimal nutzen kann, ohne dass es zu einem Kontaktverlust des elektrischen Straßenfahrzeugs zu der fahrspurgebundenen Energieversorgungsleitung kommt. Als "optimales Nutzen" soll in diesem Zusammenhang ein maximal möglicher Kontakt bzw. eine maximal mögliche Kontaktfläche zwischen dem Stromabnehmer des elektrischen Straßenfahrzeugs und der fahrspurgebundenen elektrischen Versorgungsleitung verstanden werden. Auf diese Weise wird eine maximale Energieübertragung während der Fahrt des elektrischen Fahrzeugs erzielt, so dass die Fahrt schnell und effizient durchgeführt werden kann.

In einer besonders komfortablen Ausgestaltung der erfindungsgemäßen Fahrzeugsteuerungseinrichtung ist die Fahrzeug-Steuerungseinheit dazu eingerichtet, die Sollfahrspur auf Basis der ermittelten Relativposition der Sollfahrspur automatisiert anzusteuern. Bei dieser Variante wird der Fahrer durch ein automatisiertes Spurhalteassistenzsystem unterstützt, welches das elektrische Straßenfahrzeug ohne Eingreifen des Fahrers auf der ermittelten Sollfahrspur hält. Vorteilhaft kann sich der Fahrer auf Brems- und Beschleunigungsmanöver sowie andere wichtige Bedienfunktionen des elektrischen Straßenfahrzeugs konzentrieren. Außerdem wird durch das automatisierte Nachführen des elektrischen Fahrzeugs und damit des Stromabnehmers des elektrischen Fahrzeugs eine hohe Verfügbarkeit des Oberleitungsbetriebs mit nur wenigen erzwungenen Abbügelvorgängen und Kontaktverlusten aufgrund eines unbeabsichtigten Verlassens der Sollfahrspur erreicht.

Beispielsweise kann es auch vorkommen, dass ein einzelnes Fahrzeug aufgrund einer Beeinträchtigung durch schlechtes Wetter oder einen Defekt die Position einer Sollfahrspur selbst nicht ermitteln kann. Die Kommunikation mit der zentralen Sollfahrspur-Ermittlungseinrichtung bietet in dieser Situation eine alternative Informationsquelle, die der betreffenden Fahrzeugsteuerungseinrichtung eine Ermittlung einer Position einer Sollfahrspur trotzdem ermöglicht und so eine Weiterfahrt des zugehörigen elektrischen Straßenfahrzeugs trotz widriger Umstände erlaubt.

In einer vorteilhaften Ausgestaltung der erfindungsgemäßen Fahrzeugsteuerungseinrichtung ist die Positions-Ermittlungseinheit dazu eingerichtet, zusätzlich auf der Basis von Positionsdaten eines globalen Navigationssystems eine aktuelle Position des elektrischen Straßenfahrzeugs zu ermitteln, und die ermittelte Kommunikationsschnittstelle der Sollfahrspur-Ermittlungseinheit ist dazu eingerichtet, die aktuelle Position des elektrischen Straßenfahrzeugs an die zentrale Sollfahrspur-Ermittlungseinrichtung zu übermitteln. Die Positionsmessungen der elektrischen Straßenfahrzeuge können auch nur an bekannten Stützstellen erfolgen und dort regelmäßig abgeglichen werden und zwischen den Stützstellen mit geeigneten zusätzlichen Sensordaten interpoliert werden. Zur genauen Ermittlung von Positionsdaten können auch so genannte Dead-Reckoning-Daten (Koppelnavigationsdaten) des Fahrzeugs, wie z.B. die Drehzahl der Räder oder ein Lenkeinschlag, zusammen mit den auf Basis der Infrastrukturmerkmale ermittelten Positionsdaten genutzt werden, um Positionsdaten zu gewinnen. Zudem können auch Daten aus Fahrspurerkennungssystemen mit den übrigen Daten abgeglichen werden, um so die Position eines Fahrzeugs, insbesondere relativ zu einer Sollfahrspur zu ermitteln.

Üblicherweise sind elektrische Straßenfahrzeuge bereits serienmäßig mit Navigationssystemen ausgestattet, so dass für eine Ermittlung der Position des betreffenden elektrischen Straßenfahrzeugs keine zusätzlichen Sensorelemente und Auswertungssysteme installiert werden müssen. Soll eine Positionsbestimmung besonders genau erfolgen, so kann z.B. mit Hilfe von Sensoren auch zusätzlich eine Relativposition zu einzelnen Infrastrukturmerkmalen ermittelt werden. Ist die exakte Position der einzelnen Infrastrukturmerkmale bekannt, so erlaubt diese Vorgehensweise eine besonders präzise Ermittlung der Position eines elektrischen Straßenfahrzeugs. Diese Art der Positionsbestimmung funktioniert auch dann, wenn kein Satellitensignal empfangen werden kann, z.B. in Tunnels oder anderen im Empfangsschatten der Satelliten befindlichen Orte.

Hierzu weist die erfindungsgemäße Fahrzeugsteuerungseinrichtung vorzugsweise eine Navigationsdatenempfangseinheit und/ oder eine Sensoreinheit zum Detektieren einer Relativposition von Infrastrukturmerkmalen und oder zur Detektion der Position der fahrspurgebundenen Energieversorgungsleitung auf.

Besonders bevorzugt ist die Kommunikationsschnittstelle der erfindungsgemäßen Fahrzeugsteuerungseinrichtung dazu eingerichtet, ermittelte Positionsdaten der fahrspurgebundenen Energieversorgungsleitung an die externe zentrale Sollfahrspur-Ermittlungseinrichtung weiterzuleiten. Auf diese Weise lassen sich Positionsdaten zentral sammeln und verarbeiten und einer Mehrzahl von Verkehrsteilnehmern zur Verfügung stellen, so dass eine erhöhte Zuverlässigkeit und Genauigkeit bei der Ermittlung der Positionsdaten der Sollfahrspur erzielt wird.

In einer besonders bevorzugten Ausgestaltung der erfindungsgemäßen Fahrzeugsteuerungseinrichtung umfasst die Fahrzeugsteuerungseinrichtung zusätzlich ein Fahrspurerkennungssystem zum Ermitteln einer transversalen Position des elektrischen Straßenfahrzeugs auf einer Fahrspur, eine Vergleichseinheit zum Vergleichen der durch das Fahrspurerkennungssystem ermittelten transversalen Position des elektrischen Straßenfahrzeugs mit der ermittelten Relativposition von Infrastrukturmerkmalen zu dem elektrischen Straßenfahrzeug und eine Korrektureinheit zum Korrigieren einer ermittelten Relativposition auf Basis eines Ergebnisses des Vergleichs. Mit Hilfe des Fahrspurerkennungssystems kann eine Überwachung und Korrektur der ermittelten Positionsdaten des elektrischen Fahrzeugs erfolgen. Hierdurch kann im Rahmen der Ermittlung einer Korrekturfahrstrecke zur Ansteuerung der Sollfahrspur eine größere Genauigkeit erreicht werden.

In einer Ausgestaltung des erfindungsgemäßen elektrischen Straßenfahrzeugs für ein Wegesystem mit einem Energieversorgungssystem mit einer fahrspurgebundenen Energieversorgungsleitung umfasst das elektrische Straßenfahrzeug einen Pantographen bzw. ein Stromabnehmersystem, welches in Querrichtung starr ausgelegt ist, d.h. nicht verschiebbar ist. Diese Ausgestaltung lässt sich besonders einfach realisieren und erlaubt eine robustere und kostengünstigere Konzeption des Stromabnehmersystems.

In einer bevorzugten Variante des erfindungsgemäßen Transportsystems umfasst das Transportsystem Infrastrukturmerkmale, deren Positionen in der Datenbank der zentralen Sollfahrspur-Ermittlungseinrichtung gespeichert sind. Vorteilhaft können diese Positionsdaten durch die zentrale Sollfahrspur-Ermittlungseinrichtung genutzt werden, um eine Position bzw. den Verlauf der Sollfahrspur bezogen auf die detektierten Infrastrukturmerkmale besonders genau zu ermitteln.

Die Erfindung wird im Folgenden unter Hinweis auf die beigefügten Figuren anhand von Ausführungsbeispielen noch einmal näher erläutert. Es zeigen:
- FIG 1: eine Draufsicht auf ein Transportsystem gemäß einem Ausführungsbeispiel der Erfindung,
- FIG 2: eine Seitenansicht eines Transportsystems mit einem Fahrleitungskopplungssystem gemäß einem Ausführungsbeispiel der Erfindung,
- FIG 3: eine schematische Darstellung eines elektrischen Straßenfahrzeugs gemäß einem Ausführungsbeispiel der Erfindung,
- FIG 4: eine schematische Darstellung einer zentralen Sollfahrspur-Ermittlungseinrichtung gemäß einem Ausführungsbeispiel der Erfindung,
- FIG 5: ein Flussdiagramm, welches ein Verfahren zum Überwachen und Steuern einer Trajektorie eines elektrischen Straßenfahrzeugs auf einem Wegesystem mit einer fahrspurgebundenen Energieversorgungsleitung gemäß einem Ausführungsbeispiel der Erfindung veranschaulicht.

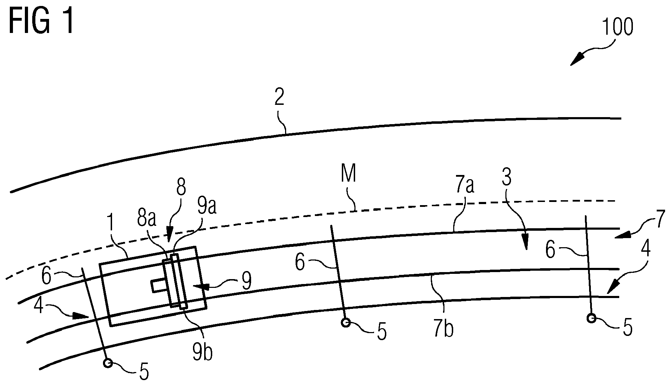

In FIG 1 ist eine Draufsicht auf einen Abschnitt eines fahrspurgebundenen Transportsystems 100 gemäß einem Ausführungsbeispiel der Erfindung gezeigt, welches ein elektrisches Straßenfahrzeug 1 gemäß einem Ausführungsbeispiel der Erfindung umfasst. Das Transportsystem 100 weist zudem eine Fahrstraße 2 mit einem Mittelstreifen M sowie ein Energieversorgungssystem mit einer Fahrleitung 7 mit zwei Fahrdrähten 7a, 7b auf, welche an Fahrleitungsmasten 4 über den Fahrspuren (nur auf einer Fahrspur gezeigt) aufgehängt sind. Die Fahrleitungsmasten 4 umfassen vertikale pfahlartige Stützelemente 5, an deren oberen Enden Querträger 6 montiert sind, an denen die Fahrleitung 7 aufgehängt ist. Die Fahrleitung 7 umfasst zwei Fahrdrähte 7a, 7b, von denen einer ein positives Potential aufweist und der andere ein negatives Potential aufweist. Das in FIG 1 gezeigte elektrische Straßenfahrzeug 1 umfasst einen Pantographen 8 mit einem Bügel 8a und einer Wippe 9 mit so genannten Schleifleisten 9a und 9b, die jeweils in Kontakt mit einem der beiden Fahrdrähte 7a und 7b stehen.

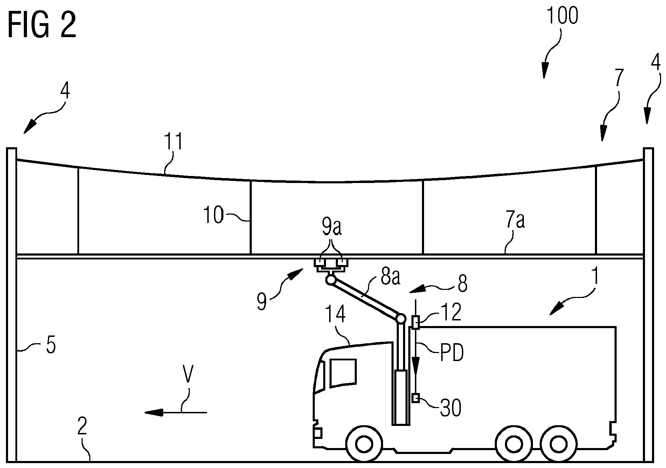

In FIG 2 ist eine Seitenansicht des in FIG 1 gezeigten Transportsystems 100 veranschaulicht. Teil des Transportsystems 100 ist eine Oberleitungsanlage 7, welche als Hin- und Rückleiter (in der Seitenansicht ist nur ein Fahrdraht 7a zu erkennen) ausgebildete Fahrdrähte 7a, 7b aufweist, die über einer Fahrspur einer Fahrbahn 2, auf der ein elektrisches Straßenfahrzeug 1 fährt, parallel zueinander verlaufen. Hierzu weist die Oberleitungsanlage 7 seitlich der Fahrbahn 2 aufgestellte Masten 4 auf, von welchen Ausleger 6 (siehe FIG 1) seitlich über eine Fahrspur der Fahrbahn 2 ragen. Über der Fahrspur verlaufen ferner zwei Tragseile 11, die von den Auslegern 6 (siehe FIG 1) gestützt werden und zwischen diesen kettenlinienförmig durchhängen. An jedem Tragseil 11 hängt je ein Fahrdraht 7a, 7b über eine Vielzahl an Hängerseilen 10, deren Längen mit zunehmender Entfernung von den Auslegern 6 abnehmen, damit eine annähernd konstante Fahrdrahthöhe über der Fahrspur der Fahrbahn 2 eingestellt werden kann. Ein Hängerseil 10 wird an einem Fahrdraht 7a, 7b mittels einer Hängerklemme (nicht gezeigt) befestigt, deren Klemmkanten mittels einer Schraubverbindung in je einer von zwei Längsrillen des Fahrdrahtes 7a, 7b formschlüssig in Eingriff gehalten werden. Diese Art der Befestigung stellt sicher, dass die Hängerklemmen (nicht gezeigt) keine Hindernisse beim Beschleifen der Fahrdrähte 7a, 7b durch den Stromabnehmer 8 des elektrischen Straßenfahrzeugs 1 darstellen. An den Enden der die Fahrdrähte 7a, 7b umfassenden Fahrleitung 7 wird das Kettenwerk durch nicht näher bezeichnete Nachspanneinrichtungen abgespannt.

Der Stromabnehmer 8 des elektrischen Straßenfahrzeugs 1 weist zwei Tragarme 8a auf, die eine Wippenanordnung 9 mit Schleifleisten 9a und 9b (wobei nur 9a zu sehen ist) tragen. Die Tragarme 8a sind fahrzeugseitig um horizontale Achsen drehbar gelagert, wodurch die Wippenanordnung 9 mittels einer nicht dargestellten Hubeinrichtung zwischen einer unteren Ruheposition, in der der Stromabnehmer 8 über einer Fahrerkabine 14 des elektrischen Fahrzeugs 1 abgelegt ist, und einer oberen Arbeitsposition, in der die Schleifleisten 9a und 9b die Fahrdrähte 7a, 7b kontaktieren, anheb- und absenkbar ist. Damit die Schleifleisten auch bei einer Querbewegung des elektrischen Straßenfahrzeugs 1 die Fahrdrähte weiter kontaktieren, wird das elektrische Straßenfahrzeug 1 automatisiert in Richtung einer virtuellen Fahrlinie, einer so genannten Sollfahrspur 3 (siehe FIG 1), gelenkt, welche in der Mitte unterhalb der beiden Fahrdrähte 7a, 7b verläuft. Hierdurch ist es möglich, die Wippenanordnung 9 bei seitlichen Fahrbewegungen und Änderungen der Richtung der Fahrdrähte 7a, 7b unterhalb der Fahrdrähte 7a, 7b zu halten, so dass die Schleifleisten 9a, 9b den Schleifkontakt zu den Fahrdrähten 7a, 7b und damit die Energieeinspeisung aufrechterhalten.

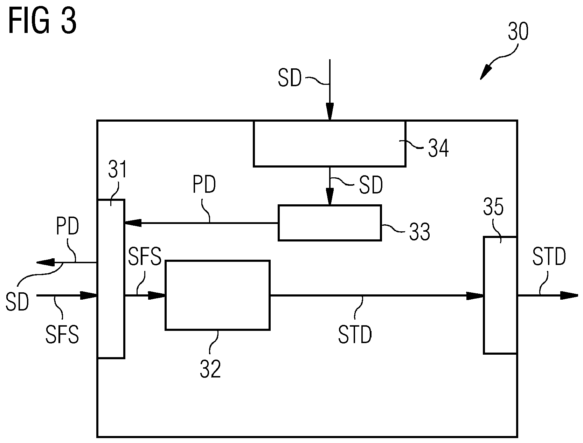

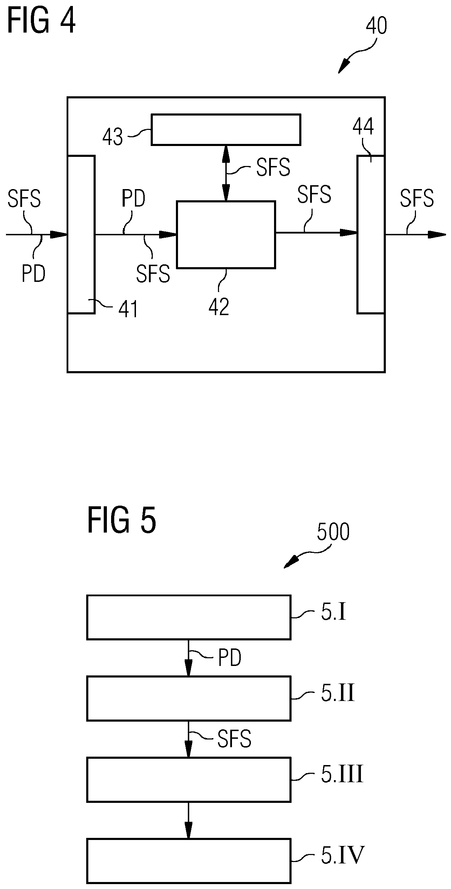

Das elektrische Straßenfahrzeug 1 weist zudem eine Fahrzeugsteuerungseinrichtung 30 auf, welche zum automatisierten Steuern des elektrischen Straßenfahrzeugs 1 dient. Die Fahrzeugsteuerungseinrichtung 30 übernimmt automatisiert Bedien- und Lenkaufgaben, welche herkömmlich von einem Fahrer wahrgenommen werden. Die Fahrzeugsteuerungseinrichtung 30 kommuniziert über eine Sende/Empfangseinheit 12 mit anderen Einheiten des Transportsystems 100, wie z.B. einer zentralen Sollfahrspur-Ermittlungseinrichtung (siehe FIG 4), welche Positionsdaten bezüglich des Verlaufs der Fahrleitung 7 ermittelt und über die Sende/Empfangseinheit 12 an die Fahrzeugsteuerungseinrichtung 30 sendet. Die Fahrzeugsteuerungseinrichtung 30 wird im Zusammenhang mit FIG 3 ausführlich erläutert.

In FIG 3 ist eine schematische Darstellung der in FIG 2 bereits gezeigten Fahrzeugsteuerungseinrichtung 30 veranschaulicht. Die in FIG 3 gezeigte Fahrzeugsteuerungseinrichtung 30 umfasst eine Sollfahrspur-Ermittlungseinheit 31, welche mit anderen Einheiten des Transportsystems 100, wie z.B. einer zentralen Sollfahrspur-Ermittlungseinrichtung 40 (siehe FIG 4), kommuniziert. Die Sollfahrspur-Ermittlungseinheit 31 empfängt z.B. Positionsdaten SFS betreffend den Verlauf einer Sollfahrspur von der zentralen Sollfahrspur-Ermittlungseinrichtung 40 (siehe FIG 4). Die erfassten Positionsdaten SFS werden an eine Fahrzeugsteuerungseinheit 32 übermittelt, welche auf Basis der Positionsdaten SFS der Sollfahrspur einen Steuerbefehl STD über eine Ausgangsschnittstelle 35 zum Lenken des elektrischen Straßenfahrzeugs 1 (siehe FIG 1, FIG 2) in Richtung der ermittelten Position der Sollfahrspur ausgibt. Zusätzlich werden bei der Erzeugung der Steuerbefehle STD auch Positionsdaten PD des elektrischen Straßenfahrzeugs 1 berücksichtigt, die von einer Positions-Ermittlungseinheit 33 ermittelt werden und eine Relativposition des elektrischen Straßenfahrzeugs 1 relativ zu Infrastrukturelementen angeben. Hierzu empfängt die Positions-Ermittlungseinheit 33 Sensordaten SD von einer Sensordateneingangsschnittstelle 34, welche mit unterschiedlichen Sensoren des elektrischen Straßenfahrzeugs 1 in Verbindung steht. Beispielsweise umfassen diese Sensoren optische Detektoren oder Radarsensoren oder Antennen, mit denen Abstände zu Infrastrukturelementen des Transportsystems 100 gemessen werden oder z.B. zusätzlich GPS-Daten empfangen werden.

Die ermittelten Positionsdaten PD des elektrischen Straßenfahrzeugs 1 werden, wie in FIG 3 gezeigt, an die Sollfahrspur-Ermittlungseinheit 31 übermittelt, um in eine Ermittlung von Positionsdaten SFS einer Sollfahrspur relativ zu einer Position des elektrischen Straßenfahrzeugs 1 einbezogen zu werden. Weiterhin können die Positionsdaten PD des elektrischen Straßenfahrzeugs 1 auch an die zentrale Sollfahrspur-Ermittlungseinrichtung 40 (siehe FIG 4) übermittelt werden, um dort in die Ermittlung der Positionsdaten SFS einer Sollfahrspur ebenfalls relativ zu einer Position des betreffenden Straßenfahrzeugs 1 miteinbezogen zu werden.

In FIG 4 ist eine schematische Darstellung einer zentralen Sollfahrspur-Ermittlungseinrichtung 40 gemäß einem Ausführungsbeispiel der Erfindung veranschaulicht. Die in FIG 4 gezeigte zentrale Sollfahrspur-Ermittlungseinrichtung 40 weist eine Datenbank 43 auf, welche Positionsdaten SFS einer Sollfahrspur abspeichert. Weiterhin umfasst die Sollfahrspur-Ermittlungseinrichtung 40 eine Empfangsschnittstelle 41 zum Empfangen von Positionsdaten SFS einer Sollfahrspur und/oder von Positionsdaten PD von Infrastrukturmerkmalen relativ zu elektrischen Straßenfahrzeugen 1. Die empfangenen Positionsdaten SFS, PD werden an eine zentrale Recheneinheit 42 übermittelt, die auf der Basis von den empfangenen Positionsdaten SFS, PD Positionsdaten SFS einer Sollfahrspur relativ zu einer Position des betreffenden elektrischen Fahrzeugs 1 ermittelt. Die ermittelten, gegebenenfalls von den empfangenen Positionsdaten SFS der Sollfahrspur abweichenden Positionsdaten SFS werden über eine Ausgangsschnittstelle 44 an die elektrischen Straßenfahrzeuge 1 übertragen.

Insgesamt ist also vorteilhaft ein modularer Systemaufbau realisiert. Das heißt, die Vorteile der Erfindung lassen sich bereits durch die Nutzung der fahrzeugseitigen Komponenten, d.h. die Fahrzeugsteuerungseinrichtung 30, zumindest teilweise erzielen. Die Realisierung der zusätzlichen Systemkomponenten, wie z.B. die zentrale Sollfahrspur-Ermittlungseinrichtung, führt in Verbindung mit der sich daraus ergebenden Erhöhung der Genauigkeit bei der Ermittlung der Position einer Sollfahrspur zu einer weiteren Verbesserung.

In Figur 5 ist ein Flussdiagramm 500 gezeigt, mit dem ein Verfahren zum Überwachen und Steuern einer Trajektorie eines elektrischen Straßenfahrzeugs auf einem Wegesystem mit einer fahrspurgebundenen Energieversorgungsleitung gemäß einem Ausführungsbeispiel der Erfindung veranschaulicht wird. Bei dem Schritt 5.I werden zunächst Daten PD bezüglich einer Relativposition eines elektrischen Straßenfahrzeugs zu einer Mehrzahl von Infrastrukturelementen ermittelt. Hierzu detektiert das elektrische Straßenfahrzeug mit Hilfe von Sensoren die Relativpositionen von Infrastrukturelementen. Weiterhin werden bei einem Schritt 5.II Positionsdaten SFS einer Sollfahrspur ermittelt, die einer fahrspurgebundenen Energieversorgungsleitung zugeordnet sind. Hierzu werden in einer Datenbank abgespeicherte Positionsdaten der Sollfahrspur an das elektrische Straßenfahrzeug übermittelt. Auf Basis der ermittelten Positionsdaten SFS der Sollfahrspur und der ermittelten Relativposition des elektrischen Straßenfahrzeugs wird dann bei einem Schritt 5.III eine Relativposition der Sollfahrspur zu dem elektrischen Straßenfahrzeug und damit automatisiert eine zu fahrende Wegstrecke ermittelt, um das elektrische Straßenfahrzeug in eine optimale Position auf der Sollfahrspur zu steuern. Schließlich wird bei einem Schritt 5.IV die ermittelte Wegstrecke automatisiert gefahren, um die Fahrt des elektrischen Straßenfahrzeugs auf der Sollfahrspur fortzusetzen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Die Erfindung ist nicht auf eine Anwendung mit Oberleitungen beschränkt, sondern die Erfindung kann auch grundsätzlich auf andere fahrspurgebundene Energieversorgungssysteme, wie z.B. Systeme mit seitlich angebrachten Stromschienen als Versorgungsleitungen, angewandt werden. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Fahrzeugsteuerungseinrichtung (30) zum automatisierten Steuern eines elektrischen Straßenfahrzeugs (1) für ein Wegesystem (2) mit einem Energieversorgungssystem mit einer fahrspurgebundenen Energieversorgungsleitung, insbesondere einem Oberleitungssystem (7), aufweisend:
- eine Positions-Ermittlungseinheit (33) zum Ermitteln einer Relativposition (PD) des elektrischen Straßenfahrzeugs (1) durch Ermitteln von aktuellen Relativpositionen (PD) von Infrastrukturmerkmalen zu dem elektrischen Straßenfahrzeug (1),
- eine Sollfahrspur-Ermittlungseinheit (31) zum Ermitteln von Positionsdaten (SFS) einer der fahrspurgebundenen Energieversorgungsleitung (7) zugeordneten Sollfahrspur (3), umfassend eine Kommunikationsschnittstelle zur Übermittlung der ermittelten aktuellen Relativpositionen (PD) von Infrastrukturmerkmalen zu dem elektrischen Straßenfahrzeug (1) von dem elektrischen Straßenfahrzeugs (1) an eine externe zentrale Sollfahrspur-Ermittlungseinrichtung (40) und zum Empfang von durch die zentrale Sollfahrspur-Ermittlungseinrichtung auf Basis der aktuellen Relativpositionen (PD) von Infrastrukturmerkmalen zu dem elektrischen Straßenfahrzeug (1) und zentral erfassten und/oder ermittelten Informationen hinsichtlich des Verlaufs bzw. der Position der anzusteuernden Sollfahrspur ermittelten Positionsdaten (SFS) umfassend eine aktuelle Relativposition einer Sollfahrspur (3) bezüglich der aktuellen Position (PD) des elektrischen Straßenfahrzeugs (1) von der externen zentralen Sollfahrspur-Ermittlungseinrichtung,
- eine Fahrzeug-Steuerungseinheit (32) zum Steuern des elektrischen Straßenfahrzeugs (1) zu der ermittelten Sollfahrspur (3) in Abhängigkeit von der ermittelten Relativposition (SFS) der Sollfahrspur (3).

2. Fahrzeugsteuerungseinrichtung nach Anspruch 1, wobei die Sollfahrspur (3) derart angeordnet ist, dass ein auf der Sollfahrspur (3) fahrendes elektrisches Straßenfahrzeug (1) die fahrspurgebundene Energieversorgungsleitung (7) optimal nutzen kann, ohne dass es zu einem Kontaktverlust des elektrischen Straßenfahrzeugs (1) zu der fahrspurgebundenen Energieversorgungsleitung (7) kommt.

3. Fahrzeugsteuerungseinrichtung nach Anspruch 1 oder 2, wobei die Fahrzeug-Steuerungseinheit (32) dazu eingerichtet ist, die Sollfahrspur (3) auf Basis der ermittelten Relativposition (SFS) der Sollfahrspur (3) automatisiert anzusteuern.

4. Fahrzeugsteuerungseinrichtung nach einem der Ansprüche 1 bis 3, wobei die Positions-Ermittlungseinheit (33) dazu eingerichtet ist, zusätzlich auf der Basis von Navigationsdaten eine aktuelle Position (PD) des elektrischen Straßenfahrzeugs (1) zu ermitteln und die Kommunikationsschnittstelle der Sollfahrspur-Ermittlungseinheit (31) dazu eingerichtet ist, die aktuelle Position (PD) des elektrischen Straßenfahrzeugs (1) an die externe zentrale Sollfahrspur-Ermittlungseinrichtung (40) zu übermitteln.

5. Fahrzeugsteuerungseinrichtung nach Anspruch 4, aufweisend eine Navigationsdatenempfangseinheit (34) und/oder eine Sensoreinheit (34) zum Detektieren einer Relativposition (PD) von Infrastrukturmerkmalen und oder zur Detektion der Position (SFS) der fahrspurgebundenen Energieversorgungsleitung (7).

6. Fahrzeugsteuerungseinrichtung nach Anspruch 4 oder 5, wobei die Kommunikationsschnittstelle dazu eingerichtet ist, ermittelte Positionsdaten (SFS) der fahrspurgebundenen Energieversorgungsleitung an die externe zentrale Sollfahrspurermittlungseinrichtung (40) zu übermitteln.

7. Fahrzeugsteuerungseinrichtung nach einem der Ansprüche 1 bis 6, aufweisend:
- ein Fahrspurerkennungssystem zum Ermitteln einer transversalen Position des elektrischen Straßenfahrzeugs (1) auf einer Fahrspur,
- eine Vergleichseinheit zum Vergleichen der durch das Fahrspurerkennungssystem ermittelten transversalen Position des elektrischen Straßenfahrzeugs (1) mit der ermittelten Relativposition (PD) von Infrastrukturmerkmalen zu dem elektrischen Straßenfahrzeug (1),
- eine Korrektureinheit zum Korrigieren einer ermittelten Relativposition (PD) auf Basis eines Ergebnisses des Vergleichs.

8. Elektrisches Straßenfahrzeug (1) für ein Wegesystem (2) mit einem Energieversorgungssystem mit einer fahrspurgebundenen Energieversorgungsleitung, insbesondere einem Oberleitungssystem (7), aufweisend eine Fahrzeugsteuerungseinrichtung (30) nach einem der Ansprüche 1 bis 7.

9. Zentrale Sollfahrspur-Ermittlungseinrichtung (40) für ein Wegesystem (2) mit einem fahrspurgebundenen Energieversorgungssystem, insbesondere einem Oberleitungssystem (7), aufweisend:
- eine Datenbank (43) mit Positionsdaten (SFS) einer Sollfahrspur (3),
- eine Empfangsschnittstelle (41) zum Empfangen von Positionsdaten (SFS) bezüglich einer Relativposition einer Sollfahrspur (3) zu Infrastrukturmerkmalen und/oder von Daten (PD) bezüglich einer Relativposition von Infrastrukturmerkmalen zu einem elektrischen Straßenfahrzeug (1),
- eine zentrale Recheneinheit (42) zum Ermitteln von Positionsdaten (SFS) einer Sollfahrspur (3) umfassend eine aktuelle Relativposition der Sollfahrspur (3) bezüglich der aktuellen Position eines Straßenfahrzeugs (1) auf der Basis der Positionsdaten (SFS) der Sollfahrspur (3) und der Daten (PD) bezüglich einer Relativposition von Infrastrukturmerkmalen zu einem elektrischen Straßenfahrzeug (1),
- eine Ausgangsschnittstelle (44) zum Übertragen der ermittelten Positionsdaten (SFSR) der Sollfahrspur (3) an ein elektrisches Straßenfahrzeug (1).

10. Transportsystem (100) mit einem Wegesystem (2) mit einer fahrspurgebundenen Energieversorgungsleitung, insbesondere einem Oberleitungssystem (7), umfassend mindestens ein elektrisches Straßenfahrzeug (1) nach Anspruch 8 und eine zentrale Sollfahrspur-Ermittlungseinrichtung (40) nach Anspruch 9.

11. Transportsystem nach Anspruch 10, aufweisend Infrastrukturmerkmale, deren Positionen (PD) in der Datenbank (43) der zentralen Sollfahrspur-Ermittlungseinrichtung (40) gespeichert sind.

12. Verfahren (400) zum Überwachen und Steuern einer Trajektorie eines elektrischen Straßenfahrzeugs (1) auf einem Wegesystem (2) mit einer fahrspurgebundenen Energieversorgungsleitung (7), insbesondere einem Oberleitungssystem, aufweisend die Schritte:
- Ermitteln einer aktuellen Relativposition (PD) des elektrischen Straßenfahrzeugs (1) zu Infrastrukturmerkmalen,
- Ermitteln von Positionsdaten (SFS) einer einer fahrspurgebundenen Energieversorgungsleitung (7) zugeordneten Sollfahrspur (3) umfassend die Schritte:
- Übermitteln der ermittelten aktuellen Relativposition (PD) von Infrastrukturmerkmalen zu dem elektrischen Straßenfahrzeug (1) von dem elektrischen Straßenfahrzeug (1) an eine zentrale Sollfahrspur-Ermittlungseinrichtung (40) und
- Empfangen von durch die zentrale Sollfahrspur-Ermittlungseinrichtung auf Basis der aktuellen Relativpositionen (PD) von Infrastrukturmerkmalen zu dem elektrischen Straßenfahrzeug (1) und zentral erfassten und/oder ermittelten Informationen hinsichtlich des Verlaufs bzw. der Position der anzusteuernden Sollfahrspur ermittelten Positionsdaten (SFS), umfassend eine aktuelle Relativposition einer Sollfahrspur (3) bezüglich der aktuellen Position des Straßenfahrzeugs (1), von der zentralen Sollfahrspur-Ermittlungseinrichtung durch das elektrische Straßenfahrzeug (1),
- Steuern des elektrischen Straßenfahrzeugs (1) zu der ermittelten Sollfahrspur (3) in Abhängigkeit von der ermittelten Relativposition (SFS) der Sollfahrspur (3).

13. Computerprogrammprodukt mit einem Computerprogramm, welches direkt in eine Speichereinrichtung eines elektrischen Straßenfahrzeugs (1) und/oder eine Speichereinrichtung einer zentralen Verkehrsleiteinrichtung ladbar ist, mit Programmabschnitten, um alle Schritte des Verfahrens nach Anspruch 12 auszuführen, wenn das Computerprogramm in dem elektrischen Straßenfahrzeug (1) und/oder der zentralen Verkehrsleiteinrichtung ausgeführt wird.

14. Computerlesbares Medium, auf welchem von einer Rechnereinheit einlesbare und ausführbare Programmabschnitte gespeichert sind, um alle Schritte des Verfahrens nach Anspruch 12 auszuführen, wenn die Programmabschnitte von der Rechnereinheit ausgeführt werden.
